# EUROPÄISCHE PATENTANMELDUNG

(11) **EP 0 644 083 A1**
(43) Veröffentlichungstag der Anmeldung: **22.03.1995**
(21) Anmeldenummer: 94113913.1
(22) Anmeldetag: 06.09.1994
(51) Int. Cl.: B60P 3/36, B62D 43/04

(54) **Staufach für Campingfahrzeuge**

(30) Priorität: 08.09.1993 DE 4330387
(71) Anmelder: DETHLEFFS GmbH, D-88316 Isny (DE)
(72) Erfinder: Riegel, Dieter, D-73037 Göppingen (DE)
(74) Vertreter: Patentanwälte Eisele, Otten & Roth

(57) **Zusammenfassung**

Es wird ein Staufach für Campingfahrzeuge wie Wohnmobile, Wohnanhänger o. dgl. vorgeschlagen, das unter dem Fahrzeugboden angeordnet ist und eine verbesserte Zugänglichkeit ermöglicht. Dies wird erfindungsgemäß dadurch erreicht, daß ein Staubehälter (3) vorhanden ist, der an seiner Oberseite eine Ladeöffnung (5) aufweist und verschiebbar unter dem Fahrzeugboden des Campingfahrzeugs (1) angebracht ist.

## Beschreibung

Die Erfindung betrifft ein Staufach für Campingfahrzeuge nach dem Oberbegriff des Anspruchs 1.

In Campingfahrzeugen wie Wohnmobilen, Wohnanhängern o. dgl. ist es sinnvoll, das vorhandene Raumangebot möglichst vollständig zu nutzen. Aus diesem Grund wurde bislang bereits der Raum unter dem Fahrzeugboden hinter der Hinterachse mit einem Staufach ausgefüllt. Dieses Staufach wurde durch eine Öffnung in der Seitenwand des Fahrzeugs zugänglich gemacht. Zu diesem Zweck wurde die seitliche Schürze am unteren Rand des Fahrzeugaufbaus mit einer Klappe versehen. Diese Klappe bildet entweder direkt den Verschluß des Staufachs oder macht diesen nach dem Wegklappen zugänglich.

Die Ladeöffnung derartiger Staufächer ist jedoch durch die seitliche Anordnung zwangsläufig sehr schmal. Das Staufach ist somit insgesamt schlecht zugänglich. Um an Gegenstände, die sich in der Mitte des Staufachs befinden, heranzukommen, muß zunächst der davorliegende Bereich leergeräumt werden. Erstreckt sich zudem die Ladeöffnung nicht über die ganze Seitenlänge des Staufachs, was häufig der Fall ist, so kann es geschehen, daß Gegenstände während der Fahrt nach hinten bezüglich der Fahrtrichtung rutschen und somit von außen kaum mehr erreichbar sind.

Die vorliegende Erfindung hat daher die Aufgabe, ein Staufach für Campingfahrzeuge wie Wohnmobile, Wohnanhänger oder dgl. zu schaffen, das unter dem Fahrzeugboden angeordnet und dabei besser zugänglich ist.

Diese Aufgabe wird ausgehend von einem Staufach der einleitend genannten Art durch die kennzeichnenden Merkmale des Anspruchs 1 gelöst.

Demgemäß wird ein Behälter vorgesehen, der an seiner Oberseite eine Ladeöffnung aufweist und der verschiebbar unter dem Fahrzeugboden angebracht ist.

Ein derartiger Behälter kann wie eine Schublade unter dem Fahrzeugboden hervorgezogen werden, wodurch seine Ladeöffnung an der Oberseite zugänglich wird. Die Ladeöffnung kann sich über die gesamte Oberseite des Behälters erstrecken. Hierdurch ist der gesamte Bereich des Staufaches problemlos zugänglich.

Es wären jedoch ohne weiteres auch mehrere kleinere Ladeöffnungen an der Oberseite des Behälters denkbar.

Durch die in den Unteransprüchen aufgeführten Maßnahmen sind vorteilhafte Ausführungen und Weiterbildungen der Erfindung möglich.

Vorteilhafterweise wird der Behälter hinter der Hinterachse des Fahrzeugs angeordnet und nach hinten bezüglich der Fahrtrichtung des Fahrzeugs verschiebbar ausgebildet. Hierdurch wird der bei Wohnmobilen häufig als Stauraum nutzbare Bereich hinter der Hinterachse durch ein erfindungsgemäßes Staufach ausgefüllt. Überlicherweise ist der Raum für dieses Staufach in Längsrichtung des Fahrzeugs schmaler als in Richtung der Fahrzeugbreite. Um also die gesamte Oberseite eines dementsprechend ausgebildeten Behälters freizulegen, ist der hierzu notwendige Verschiebungsweg nach hinten kürzer als zur Seite hin.

Vorzugsweise wird der Staubehälter unter dem Fahrzeugboden absenkbar ausgebildet. Hierdurch wird es möglich, den Staubehälter unter dem Fahrzeugboden hervorzuziehen, ohne eine entsprechende Klappe an der abschließenden Schürze am unteren Rand des Fahrzeugaufbaus vorzusehen. Dies wäre insbesondere dann schwierig, wenn der Behälter wie oben angeführt nach hinten verschoben werden soll. Hier steht einer solchen Bewegung nicht nur eine einfache Seitenschürze im Wege, sondern üblicherweise die Stoßstange des Fahrzeugs mitsamt ihrer Aufhängung. Ein absenkbarer Staubehälter kann unterhalb des Niveaus der Stoßstange abgesenkt werden und somit problemlos nach hinten unter dem Fahrzeugboden herausgezogen werden.

In einer besonderen Ausführungsform wird der Staubehälter schwenkbar unter dem Fahrzeugboden angebracht. Damit der Staubehälter unterhalb der Stoßstange hervorgezogen werden kann, genügt es, wenn er mit seiner Hinterseite unter das Niveau der Stoßstangenunterkante gebracht wird. Im Anschluß hieran wird er in diesem Fall schräg unter einem bestimmten Neigungswinkel hervorgezogen.

Vorzugsweise wird der Behälter quaderförmig ausgebildet, um den zur Verfügung stehenden Stauraum hinter der Hinterachse des Fahrzeugs komplett auszufüllen.

Eine besonders solide Aufhängung des Staubehälters ergibt sich durch eine Befestigung am Fahrzeugrahmen.

Um die Aufhängung des Staubehälters verschiebbar zu gestalten, empfiehlt es sich, teleskopartige Halterungsstangen vorzusehen. Soll der Behälter in der schwenkbaren Version ausgebildet werden, so kann eine derartige Halterungsstange in der Nähe der Hinterachse des Fahrzeugs drehbar befestigt werden. Eine derartige teleskopartige Halterungsstange besteht aus einem Hohlprofil, in das eine Stange eingeschoben werden kann, deren Außenumfang kleiner ist als der Innenumfang des Hohlprofils, wobei der Außenumfang der einzuschiebenden Stange in der Regel den gleichen Verlauf aufweist wie der Innenumfang des Hohlprofils. Der Staubehälter wird in einem solchen Fall vorzugsweise mit dem Hohlprofil verbunden, so daß er sich bezüglich der Einschubstange verschieben kann.

Um die Absenkbewegung des Staubehälters kontrolliert vorzunehmen und eine sichere Halterung des Behälters an der Hinterseite des Fahrzeugs vorzusehen, empfiehlt es sich, wenigstens einen Schwenkhebel vorzusehen. In einem besonderen Ausführungsbeispiel werden zwei derartige Schwenkhebel an den beiden parallel zur Verschiebungsrichtung stehenden Seitenwänden des Behälters angeordnet. Hierdurch wird der Behälter stabil gehaltert und gleichzeitig die gewünschte Absenkbewegung ermöglicht.

Um wie oben angegeben eine stabile Halterung des Staubehälters an einem solchen Schwenkhebel zu gewährleisten und andererseits eine davon unabhängige Verschiebung des Staubehälters zu ermöglichen ist es vorteilhaft, wenn ein solcher Schwenkhebel an einem Ende drehbar am Fahrzeug befestigt ist und am anderen Ende dreh- und verschiebbar mit dem Behälter verbunden ist.

Eine Möglichkeit für eine derartige Ausbildung ist durch eine drehbar am Schwenkhebel befestigte Stützrolle gegeben, die auf einer am Behälter vorgesehenen Führungsschiene abrollen kann. Durch eine solche Stützrolle wird die Drehbewegung des Schwenkhebels und somit auch die Drehbewegung des Behälters unabhängig von der Verschiebung des Staubehälters. Gleichzeitig wird der Staubehälter in jeder Position über die Stützrolle und die entsprechende Führungsschiene in Verbindung mit den oben angeführten teleskopartigen Halterungsstangen stabil gehaltert.

Da ein gefüllter Staubehälter ein erhebliches Gewicht aufweisen kann, empfiehlt es sich, ein Getriebe zur Betätigung der Schwenkbewegung über die Schwenkhebel vorzusehen. Vorzugsweise besteht ein solches Getriebe aus einem selbsthemmenden Schneckenradgetriebe, das mit einer Handkurbel versehen ist. Es sind jedoch ohne weiteres andere Getriebearten und vor allem auch andere Antriebsmöglichkeiten, beispielsweise mittels eines Motors, denkbar.

Zur Sicherung des Behälters in seiner geschlossenen Stellung unter dem Fahrzeugboden wird vorzugsweise eine Einhängeschnalle am Behälter und ein entsprechender Haken zum Einhängen einer Lasche dieser Einhängeschnalle am Fahrzeug vorgesehen.

Der Deckel des Behälters kann durch den Fahrzeugboden gebildet werden oder aber auch aus einem eigens dafür vorgesehenen Deckelblech unter dem Fahrzeugboden bestehen. Ein solches Deckelblech wird vorzugsweise an seinen Rändern abgewinkelt, so daß es den Behälter in der geschlossenen Stellung umgreift.

Ein Ausführungsbeispiel der Erfindung ist in der Zeichnung dargestellt und wird anhand der nachfolgenden Beschreibung näher erläutert.

Im einzelnen zeigen
- Fig. 1: eine schematische Seitenansicht eines Wohnmobils mit einem erfindungsgemäßen Staufach in ausgefahrenem Zustand,
- Fig. 2: eine teilweise aufgeschnittene ausschnittsweise dargestellte Hinteransicht eines Wohnmobils,
- Fig. 3: eine Draufsicht auf einen erfindungsgemäßen Staubehälter mit Aufhängung und Antrieb,
- Fig. 4: eine Ansicht eines teilweise aufgeschnittenen Schneckengetriebes,
- Fig. 5: einen Querschnitt einer Führungsschiene und eine Ansicht des entsprechenden Schwenkhebels in geschlossener Stellung des Behälters,
- Fig. 6: eine Darstellung wie Fig. 5, jedoch auf der gegenüberliegenden Seite des Staubehälters und in geöffneter Stellung,
- Fig. 7: einen schematischen Teilschnitt in Längsrichtung des Fahrzeugs durch das Staufach mitsamt seiner Aufhängung und
- Fig. 8: einen detallierten Teilschnitt in Längsrichtung des Fahrzeugs, der das hintere Ende des Behälters mitsamt seiner Aufhängung zeigt.

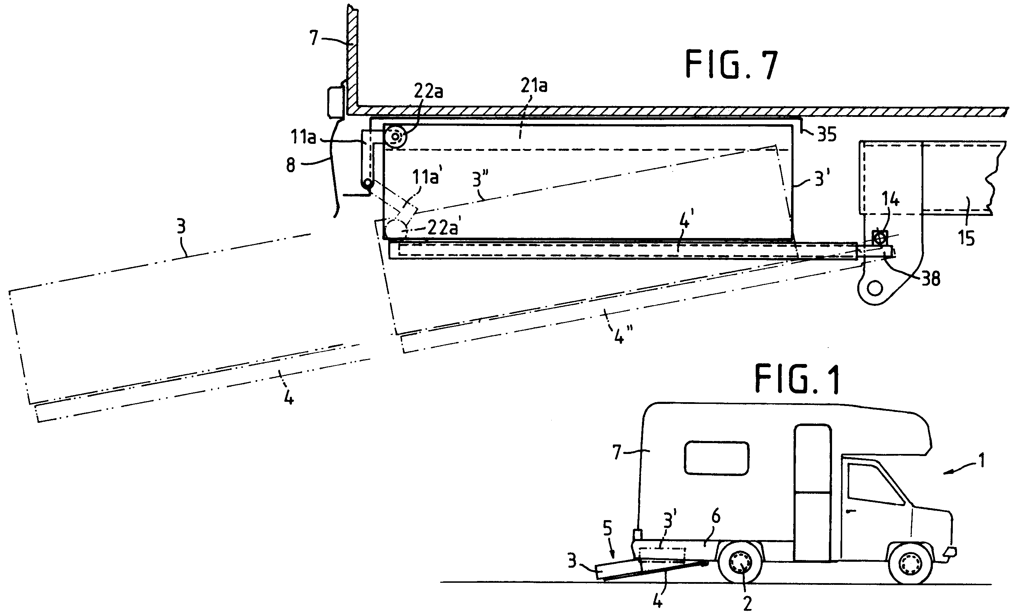

Fig. 1 zeigt ein herkömmliches Wohnmobil 1 hinter dessen Hinterachse 2 ein erfindungsgemäßer Staubehälter 3 in ausgefahrenem Zustand mit auseinandergezogener teleskopartiger Halterungsstange 4 dargestellt ist. Mit gestrichelten Linien ist der Staubehälter 3' in geschlossener Stellung eingezeichnet. Eine Ladeöffnung 5 befindet sich an der Oberseite des Staubehälters 3, der in der geschlossenen Stellung 3' von einer Seitenschürze 6 des Fahrzeugsaufbaus 7 verdeckt wird.

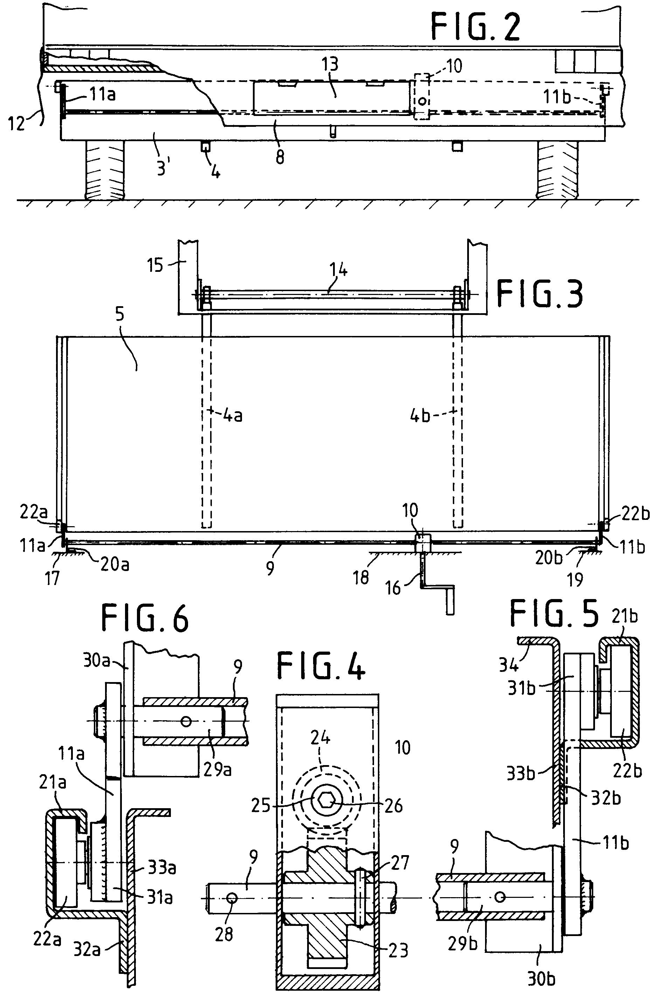

In der Teilansicht der Fahrzeugrückseite gemäß Fig. 2 ist die hintere Fahrzeugverkleidung 8 teilweise aufgeschnitten dargestellt. Dahinter kommt der Staubehälter 3' in geschlossener Stellung zum Vorschein. Eine Antriebsstange 9 führt von einem Getriebegehäuse 10 beidseitig nach außen zu zwei Schwenkhebeln 11a, 11b. Eine Seitenschürze 12 veranschaulicht in der Schnittdarstellung, wie der Staubehälter in geschlossener Stellung 3' von den Seitenschürzen 12 und der hinteren Fahrzeugverkleidung 8 umfaßt wird. Das Getriebegehäuse 10 ist asymmetrisch bezüglich der Fahrzeugbreite angeordnet, da sich fahrzeugmittig die Halterungsplatte 13 für das Nummernschild befindet.

Gemäß Fig. 3 ist der Staubehälter 3' in geschlossener Stellung mittels teleskopartiger Halterungsstangen 4a, 4b und einer Quertraverse 14 drehbar um die Mittelachse der Quertraverse 14 am Fahrzeugrahmen 15 befestigt. Beidseitig des Staubehälters 3' sind die Schwenkhebel 11a, 11b vorgesehen, die fest mit der Antriebsstange 9 verbunden sind. Die Antriebsstange 9 durchsetzt das Getriebegehäuse 10. In das Getriebegehäuse 10 ist eine Handkurbel 16 eingesteckt. Durch drei schraffierte Linien sind drei fahrzeugfeste Bezugspunkte 17 bis 19 angedeutet, an denen die Antriebsstange 9 über zwei Lager 20a, 20b im Bereich der jeweiligen Enden der Antriebsstange 9 sowie innerhalb des Getriebegehäuses 10 gelagert ist. Seitlich am Staubehälter 3' befinden sich zwei Führungsschienen 21a, 21b die auf jeweils einer Stützrolle 22a, 22b aufliegen.

In dem teilweise aufgeschnittenen Getriebegehäuse 10 nach Fig. 4 befindet sich ein Stirnzahnrad 23, das mit einem Schneckenrad 24 kämmt. Die Achse 25 des Schneckenrads 24 ist mit einer Sechskantöffnung 26 zur Aufnahme eines entsprechenden Endes einer Handkurbel 16 versehen. Das Stirnzahnrad 23 ist mit der Antriebsstange 9 über einen Stift 27 drehfest gekoppelt. Eine Bohrung 28 ist vorgesehen, um zwei Teile der im vorliegenden Fall mehrteiligen Antriebsstange 9 über Querstifte miteinander zu verbinden.

Das äußere Ende der Antriebsstange 9 ist gemäß Fig. 5 über einen Zapfen 29b fest mit dem Schwenkhebel 11b verbunden. Über diesen Zapfen 29b ist der winkelförmige Schwenkhebel 11b drehbar in einem Halterungsblech 30 gelagert. An seinem anderen Ende 31b ist an dem Schwenkhebel 11b die Stützrolle 22b drehbar befestigt. Die Stützrolle 22b wird von der Führungsschiene 21b, die im vorliegenden Fall als C-Profil ausgeführt ist, umschlossen.
Die Führungsschiene 21b ist über eine gewinkelte Verlängerung 32b an der Seitenwandung 33b des Staubehälters 5 befestigt. Die Seitenwandung 33b des Behälters 3' ist an der Oberkante 34 eingeschlagen.

Der dem Schwenkhebel 11b gegenüberliegende Schwenkhebel 11a ist gemäß Fig. 6 in der geöffneten Stellung des Staubehälters 3 dargestellt. In diesem Zustand liegt die Oberkante 34 des Staubehälters 3 unterhalb der Antriebsstange 9, da diese gemeinsam mit dem Schwenkhebel 11a gegenüber Fig. 5 verdreht ist. Bis auf die geänderte relative Position untereinander entsprechen die in Fig. 6 gezeigten, mit a gekennzeichneten Bauelemente den mit b Gekennzeichneten gemäß Fig. 5.

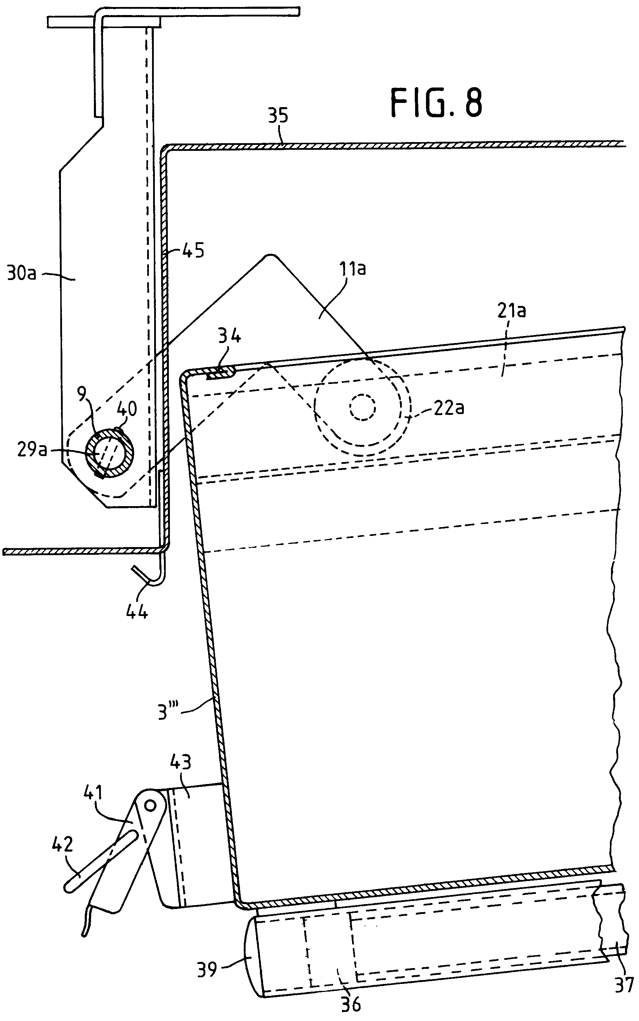

Der Übergang des Behälters 3 von seiner geöffneten Position in seine geschlossene Stellung 3' über eine Zwischenposition 3'' ist in Fig. 7 dargestellt. Deutlich erkennbar ist eine angewinkelte Ausbildung des Schwenkhebels 11a. Der Behälter 3' in seiner geschlossenen Position wird von einem Deckelblech 35 umfaßt und somit abgedichtet. An der Unterseite des Behälters 3' befindet sich die Halterungsstange 4'. Diese setzt sich teleskopartig aus einem äußeren Hohlprofil 36 und einer in dieses Hohlprofil 36 eingeschobenen Stange 37 zusammen. Die Stange 37 ist an ihrem Vorderende 38 mit der Quertraverse 14 verbunden, die an Abschleppösen des Fahrzeugrahmens 15 gelagert ist.

Eine weitere Zwischenposition des Staubehälters 3''' ist in der vergrößerten Darstellung des hinteren Behälterteils gemäß Fig. 8 dargestellt. In dieser Figur ist insbesondere die Lagerung des Schwenkhebels 11a im Halterungsblech 30a mittels des Zapfens 29a deutlich zu erkennen. Der Zapfen 29a ist mit der Stange 9 mittels eines Stifts 40 drehfest gekoppelt. Im unteren Bereich des Behälters 3''' ist das Hohlprofil 36 dargestellt, in das die Stange 37 eingeschoben ist. Die Stange 37 ist in diesem Ausführungsbeispiel ebenfalls als Hohlprofil mit kleinerem Außenumfang ausgebildet. Die Öffnung des Hohlprofils 36 ist mit einem Stopfen 39 verschlossen. Eine Schnalle 41 mit einer Lasche 42 ist über eine Halterung 43 am Staubehälter 3''' befestigt. Die Lasche 42 ist zum Einhängen in einen Haken 44 vorgesehen, der an einer abgewinkelten Verlängerung 45 des Deckelblechs 35 fest angebracht ist.

Die Handhabung des Staubehälters 3 vollzieht sich in folgender Weise. Zum Öffnen des Staufachs das sich zunächst in seiner geschlossenen Stellung 3' befindet, wird die Handkurbel 16 in die Sechskantöffnung 26 des Schneckenrads 24 eingeführt und in Drehung versetzt. Hierdurch wird über das Stirnzahnrad 23 die Antriebsstange 9 gedreht, wodurch sich die Schwenkhebel 11a, 11b, die fest mit der Antriebsstange 9 über die Zapfen 29a, 29b verstiftet sind, nach unten drehen. Der auf den Stützrollen 22a, 22b mit den als C-Profilen ausgebildeten Führungsschienen 21a, 21b aufliegende Staubehälter 3 folgt dieser Bewegung. Hierbei schwenken die teleskopartigen Halterungsstangen 4 um die Achse der Quertraverse 14 nach unten. Am Ende dieser Schwenkbewegung erreicht der Behälter über seine Zwischenposition 3''' die Zwischenstellung 3''. In dieser Stellung kann er geführt durch die teleskopartigen Halterungsstangen 4 unter der hinteren Fahrzeugverkleidung 8 hinter dem Wohnmobil in die geöffnete Position 3 hervorgezogen werden. Der Staubehälter 3 ist nunmehr von oben über seine die gesamte Oberseite einnehmende Ladeöffnung 5 zugänglich.

Das Schließen des Staufachs vollzieht sich in der umgekehrten Reihenfolge. Der Staubehälter 3 wird bis zur Position 3'' eingeschoben, wonach wiederum durch Drehen der Handkurbel 16 über das selbsthemmende Schneckenradgetriebe 23, 24 und die Antriebsstange 9 die Schwenkhebel 11a, 11b so angetrieben werden, daß sich der Behälter 3'' wieder in seine geschlossene Position 3' bewegt. Zur Absicherung gegen ein unbeabsichtigtes Öffnen des Staufachs wird nun die Lasche 42 der Schnalle 41 in den Haken 44 eingehängt und die Schnalle 41 geschlossen. Hierdurch ist das Staufach gegen unbeabsichtigtes Öffnen gesichert. Durch das Deckelblech 35 ist der Staubehälter 3 gut nach oben hin abgedichtet.

Selbstverständlich wären auch andere Ausführungen eines erfindungsgemäßen Staufaches denkbar. So könnte beispielsweise der Behälter 3 auch waagrecht zur Seite hin über einen entsprechenden Mechanismus ausziehbar ausgebildet werden. Hierbei wäre dann eine entsprechende Klappe in der Seitenverkleidung vorzusehen. Wesentlich an der Erfindung ist die verschiebbare Ausgestaltung des Staubehälters 3, so daß er über seine Ladeöffnung 5 an der Oberseite zugänglich wird.
- 1: Wohnmobil
- 2: Hinterachse
- 3: Staubehälter in geöffneter Stellung
- 3': Staubehälter in geschlossener Stellung
- 4: Halterungsstange
- 5: Ladeöffnung
- 6: Seitenschürze
- 7: Fahrzeugaufbau
- 8: Hintere Fahrzeugverkleidung
- 9: Antriebsstange
- 10: Getriebegehäuse
- 11: Schwenkhebel
- 12: Seitenschürze
- 13: Halterungsplatte
- 14: Quertraverse
- 15: Fahrzeugrahmen
- 16: Handkurbel
- 17: Fahrzeugfester Bezugspunkt
- 18: Fahrzeugfester Bezugspunkt
- 19: Fahrzeugfester Bezugspunkt
- 20: Lager
- 21: Führungsschiene
- 22: Stützrolle
- 23: Stirnzahnrad
- 24: Schneckenrad
- 25: Achse
- 26: Sechskantöffnung
- 27: Stift
- 28: Bohrung
- 29: Zapfen
- 30: Halterungsblech
- 31: Ende des Schwenkhebels
- 32: Verlängerung
- 33: Seitenwandung
- 34: Oberer Rand
- 35: Deckelblech
- 36: Hohlprofil
- 37: Stange
- 38: Vorderende
- 39: Stopfen
- 40: Stift
- 41: Schnalle
- 42: Lasche
- 43: Halterung
- 44: Haken
- 45: Verlängerung

## Patentansprüche

1. Staufach für Campingfahrzeuge wie Wohnmobile, Wohnanhänger o. dgl., das unter dem Fahrzeugboden angeordnet ist, dadurch gekennzeichnet, daß ein Staubehälter (3) vorhanden ist, der an seiner Oberseite eine Ladeöffnung (5) aufweist und verschiebbar unter dem Fahrzeugboden angebracht ist.

2. Staufach nach Anspruch 1, dadurch gekennzeichnet, daß der Behälter (3) hinter der Hinterachse (2) des Fahrzeugs (1) angeordnet und nach hinten bezüglich der Fahrtrichtung des Fahrzeugs verschiebbar ist.

3. Staufach nach einem der vorhergehenden Ansprüche, dadurch gekennzeichnet, daß der Staubehälter (3) absenkbar vorgesehen ist.

4. Staufach nach einem der vorhergehenden Ansprüche, dadurch gekennzeichnet, daß der Staubehälter (3) schwenkbar unter dem Fahrzeugboden angebracht ist.

5. Staufach nach einem der vorhergehenden Ansprüche, dadurch gekennzeichnet, daß der Staubehälter (3) quaderförmig ist.

6. Staufach nach einem der vorhergehenden Ansprüche, dadurch gekennzeichnet, daß der Staubehälter (3) am Fahrzeugrahmen (15) gehaltert ist.

7. Staufach nach einem der vorhergehenden Ansprüche, dadurch gekennzeichnet, daß der Staubehälter (3) mit wenigstens einer teleskopartigen Halterungsstange (4) am Fahrzeugrahmen (15) gehaltert ist.

8. Staufach nach einem der vorhergehenden Ansprüche, dadurch gekennzeichnet, daß wenigstens ein Schwenkhebel (11a, 11b) vorhanden ist, mittels dem der Staubehälter (3) schwenkbar gelagert ist.

9. Staufach nach einem der vorhergehenden Ansprüche, dadurch gekennzeichnet, daß zwei Schwenkhebel (11a, 11b) an den beiden parallel zur Ausziehrichtung stehenden Seitenwänden des Behälters (3) angeordnet sind.

10. Staufach nach einem der vorhergehenden Ansprüche, dadurch gekennzeichnet, daß der oder die Schwenkhebel (11a, b) an einem Ende drehbar am Fahrzeug (1) befestigt sind und am anderen Ende dreh- und verschiebbar mit dem Behälter (3) verbunden sind.

11. Staufach nach einem der vorhergehenden Ansprüche, dadurch gekennzeichnet, daß eine Stützrolle (22a,b) am Schwenkhebel (11a, b) drehbar befestigt ist, die an einer am Staubehälter (3) vorgesehene Führungsschiene (21a, b) abrollbar ist.

12. Staufach nach einem der vorhergehenden Ansprüche, dadurch gekennzeichnet, daß der oder die Schwenkhebel (11a, 11b) über ein Getriebe (9, 23, 24) betätigbar sind.

13. Staufach nach einem der vorhergehenden Ansprüche, dadurch gekennzeichnet, daß das Getriebe (9, 23, 24) ein selbsthemmendes Schneckenradgetriebe mit Handkurbel ist.

14. Staufach nach einem der vorhergehenden Ansprüche, dadurch gekennzeichnet, daß eine Einhängeschnalle (41) mit einer Lasche (42) zum Einhängen in einen Haken (44) zur Sicherung des Staubehälters (3) in geschlossener Stellung vorhanden ist.
